# EUROPEAN PATENT APPLICATION

(11) **EP 0 793 930 A1**
(43) Date of publication of application: **10.09.1997**
(21) Application number: 97500045.6
(22) Date of filing: 06.03.1997
(51) Int. Cl.: A47C 7/62, B60N 3/04

(54) **A windable cleaning mat band for seat furniture**

(30) Priority: 06.03.1996 ES 9600572 U
(71) Applicant: Setien Aldea, Eduardo, 28016 Madrid (ES)
(72) Inventor: Setien Aldea, Eduardo, 28016 Madrid (ES)
(74) Representative: Del Campo Castel, Domingo

(57) **Abstract**

Windable cleaningmat band for seat furniture, consisting of a resistant material to be spread in front of the piece of furniture, at its feet, being incorporated inside thereof, specifically into its own structure or frame, entailing the alternative of being externally fixed thereto, and being adjustable to different heights above the floor to be protected, its operation being manual or automatic, and the possibility of being removed to be replaced or cleaned.

## Description

### BACKGROUND OF THE INVENTION

The present novelty, as stated in the title of the present specification, refers to the incorporation into a seat furniture of a resistant material band, susceptible of being wound up, and spreading and winding up in a few seconds, in order to protect carpets and parquets.

### RELATED ART

Due to the fact that this is an improvement application for a common element used by a greater part of citizens, and being sold in many shops marketing at present furniture, nothing is known about the existence of a similar material in the present market.

### SUMMARY OF THE INVENTION

The device consists of the incorporation of a windable and resistant material band having a width equal to that of a seat furniture, that is to say, a sofa, an armchair, an easy chair or a chair, that, incorporated into it in a cartridge (if the structure allows it to be internally installed, as in the case of a sofa, or as an external accessory, in the case of a chair), allows a carpet or a parquet to be protected from marks of rubbing, spots and scratches on the floor, being spread in front thereof, and stuck thereon, at a variable distance according to the needs.

The spreading system of the band would be to pull a flange joined widthwise to one of the ends of the material of the band, while the winding could be manual, rotating an external knurled buttom which could be one of the ends of a shaft to which the other end of the band is joined, and around which the band winds up inside the cartridge, or automatically if the shaft would have a spring (same system that of the autowindable metric tapes), so that when the cleaningmat band would be placed perpendicularly to the cartridge and at the hight of this, it would be automatically wound due to the spring pulling, rotating as a consequence of the force exerted by said spring.

Likewise, said cartridge could have a side opening, so that the cleaningmat band roll could be not only stationary, but also extractible in order to be easily cleaned or replaced.

### BRIEF DESCRIPTION OF THE DRAWINGS

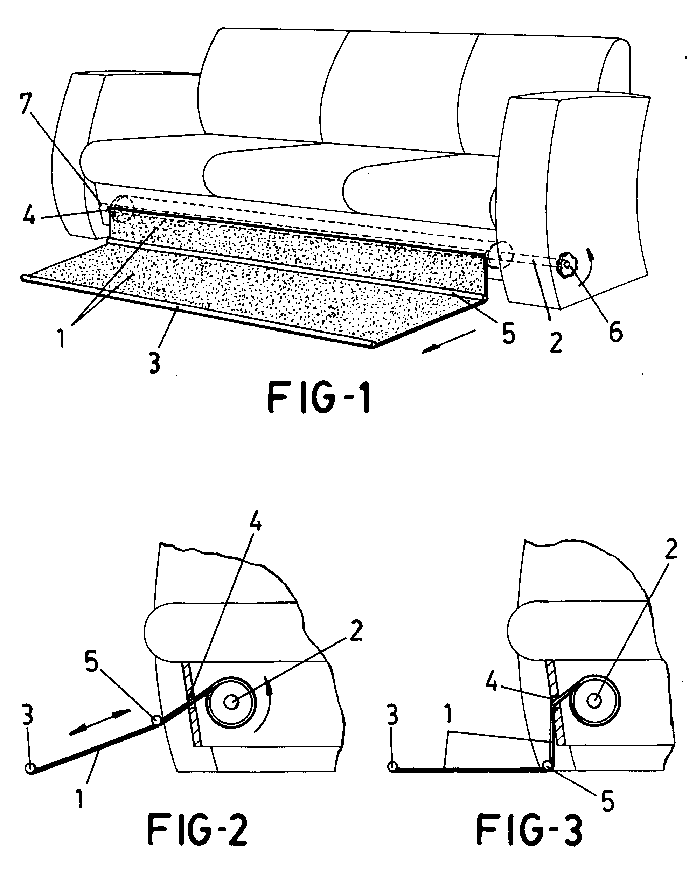

Figure 2 shows a front view of a seat furniture of several seats, the structure of which allows the cartridge with the cleaningmat band to be internally incorporated.

Figure 2 shows a view, in two profiles, of the element referred to in Fig. 1, with the band spread in final position.

Figure 3 shows a seat furniture to which the cartridge with the extensible band if externally fixed as an accessory.

### DETAILED DESCRIPTION OF A PREFERRED EMBODIMENT

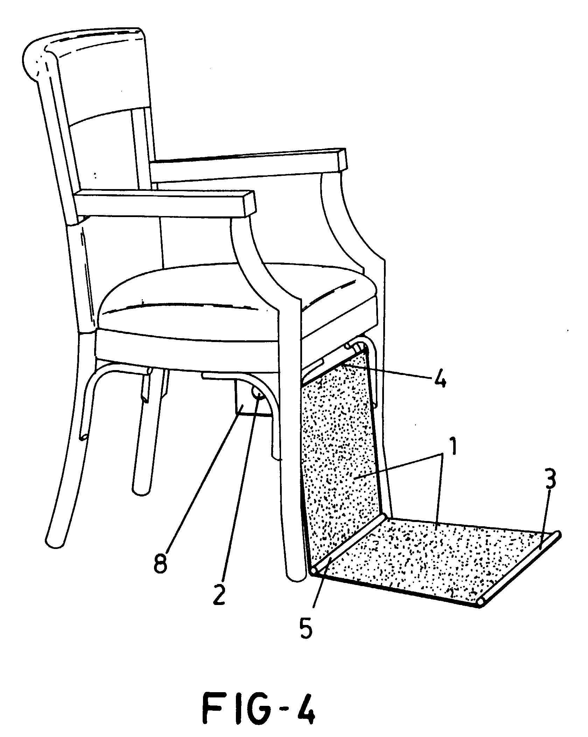

From said figures 1 an 2, it can be seen how the device is constituted by a cartridge having a width equal to that of piece of furniture, having inside a windable band of material 1, fixed - widthwise at one of the ends to a shaft 2 around which the band is wound, the whole being installed within the furniture structure. To spread the band, there is in the front part of the furniture, inside it, a flange of a rigid material inserted and ballasted having nearly the same width that the furniture 3; joined to this flange by means of a rack or similar device allowing the cleaning-mat to be unlocked (extracted), there is an end of the latter (the other end being fixed to shaft 2); when pulling the flange 3, a window, having about two centimers, opens (the same width that this flange), appearing immediately behind a second flange 5, also ballasted, made of a rigid material, at the centre of - which there is a minimal opening through which the material of the band passes, this flange having a course equal to the band, so being, therefore, movable, Fig.2, 5.

Figure 2 shows, in two profiles, that above described. The flange 3 is pulled up to a desired distance, and with the second flange 5, the vertical position of the band from the exit window up to the floor is obtained, the carpet or parquet below said band at at the desired distance between both flanges being protected.

The winding system of the band can be manual, rotating a knurled buttom externally located at one of the sides, and forming a part of the central shaft, after sliding the movable flange 5 near the fixed one 3, and both flanges being close to the window 4, or automatic, with a spring located at the central shaft, and exerting a turning pressure on this, so that when the band is perpendicular to the window, the band can be automatically wound.

At the same time, the knurled buttom 6 can have the cartridge diameter, so that in the turning sense it can wind the cleaning-mat band, and in the opposite sense, it unlocks the central shaft 2 from the opposite supporting point 7, so that, as already state, the flange 3 being disengageable from the band, and the movable one 5 being also extractable, the band roll of the cartridge can be unloaded by pulling out the knurled buttom.

Figure 3 shows graphically the above, in the case the seat furniture cannot allow the cleaningmat band to be internally incorporated, and the cartridge containing it 8 being an external accessory.

Finally, it should be pointed out that the material of the cleaningmat band must be as resistant as possible, so resilient to allow its winding to be performed, transpirable and non-generating electrostatic electricity due to friction (these two last points are very important for the band being stretched out on a carpet).

## Claims

1. A WINDABLE CLEANINGMAT BAND FOR A SEAT FURNITURE, characterized in that it is made of a resistant material, to be spread in front of a piece of furniture, at its feet, being incorporated into its own structure of frame, or being externally fixed thereto, having furthermore characteristics of adaptation to different distances on the floor to be protected, its operation - being manual or automatic, and with possibility of being extracted to be replaced or cleaned.
